# EUROPÄISCHE PATENTSCHRIFT

(11) **EP 0 964 798 B1**
(45) Veröffentlichungstag und Bekanntmachung des Hinweises auf die Patenterteilung: **14.05.2003**
(21) Anmeldenummer: 98905138.8
(22) Anmeldetag: 06.03.1998
(51) Int. Cl.: B60P 1/44

(54) **STEUERVORRICHTUNG FÜR HYDRAULISCHE ARBEITSZYLINDER**
CONTROL DEVICE FOR HYDRAULIC POWER CYLINDERS
DISPOSITIF DE REGULATION POUR VERINS D'ACTIONNEMENT HYDRAULIQUES

(30) Priorität: 07.03.1997 AT 39897
(43) Veröffentlichungstag der Anmeldung: 22.12.1999
(73) Patentinhaber: WEBER, Gisela, A-2474 Gattendorf (AT)
(72) Erfinder: WEBER, Gisela, A-2474 Gattendorf (AT)
(74) Vertreter: Holzer, Walter, Dipl.-Ing.
(86) Internationale Anmeldenummer: AT9800057
(87) Internationale Veröffentlichungsnummer: WO98040239

(56) Entgegenhaltungen:
- DE-A- 3 630 850
- US-A- 5 305 680

## Beschreibung

Die Erfindung betrifft eine Steuervorrichtung für hydraulische Arbeitszylinder, insbesondere Arbeitszylinder einer Lastfahrzeug-Ladebordwand, mit einer von einem Motor angetriebenen Hydraulikmediumpumpe, die mit einem Mediumvorrat und über Pumpenzweigleitungen mit jeweils einer Kammer des Arbeitszylinders über zugeordnete Steuerventile in Verbindung setzbar ist.

Bei bisher bekannten Steuervorrichtungen dieser Art (US-A-5 305 680) hat sich in der Praxis das Problem ergeben, daß bei unvorschriftsmäßiger Positionierung der Last auf der Ladebordwand Kippmomente entstehen, die sich als erhöhte Zug- und Druckkräfte in den Hubarmen und Schließzylindern der Ladebordwand auswirken. Dabei kann es beispielsweise zu einer Überschreitung bis zum 5-fachen der zulässigen Kräfte kommen, die zu einer Beschädigung oder Zerstörung der Hubarme und/oder Schließzylinder führen kann.

Die Erfindung zielt darauf ab, eine Vorrichtung der einleitend angegebenen Art zu schaffen, welche die vorstehend aufgezeigten Gefahren hintanhält. Die erfindungsgemäße Steuervorrichtung hat die Merkmale, daß an die Kammer oder jeweilige Pumpenzweigleitung des Arbeitszylinders eine einstellbare elektrische Druckmeß- und Schalteinrichtung angeschlossen ist, die mit einem Rechner für die Eingabe von Grenz-Druckwerten versehen ist und über welche bei Überschreiten eines vorbestimmten Grenzdruckes der Pumpenmotorantrieb stillsetzbar und ein Signalgeber aktivierbar sind, wobei an die Kammer oder jeweilige Pumpenzweigleitung ferner ein auf einen geringeren Öffnungsdruck als der genannte Grenzdruck eingestelltes Sicherheitsventil über ein in der Ruhestellung der Vorrichtung öffnendes Elektromagnetventil angeschaltet ist.

Durch die Erfindung wird auf konstruktiv einfache Weise eine Überlastung z.B. der Hubarme und Schließzylinder einer Ladebordwand vermieden und zugleich ein Warnsignal erzeugt. Das in der Ruhestellung freigegebene Sicherheitsventil gewährleistet, daß nicht schon eine bloße Erwärmung des Hydraulikkreises, wie sie z.B. bei einer längeren Standzeit des Fahrzeuges in der Sonne auftritt und zu einem Druckanstieg von 10 bar/°C führt, zu einer Überlastanzeige beim Einschalten der Druckmeßund Schalteinrichtung führt.

Im Rahmen der Erfindung wird die Druckmeß- und Schalteinrichtung bevorzugt nur in der Offenstellung einer Ladebordwand oder eines anderen belasteten Arbeitselementes, z.B. eines Kranes, innerhalb eines Neigungswinkels derselben von ±15° mit der elektrischen Anspeisung in Verbindung gesetzt.

Vorzugsweise ist von der elektrischen Druckmeß- und Schalteinrichtung ein Zählwerk für die Anzahl der Drucküberschreitungen aktivierbar.

Die Erfindung wird nachfolgend an einem Ausführungsbeispiel unter Bezugnahme auf die Zeichnung näher erläutert, in der ein hydraulisches Schaltschema einer Steuervorrichtung gemäß der Erfindung für eine Ladebordwand eines Lastfahrzeuges gezeigt ist.

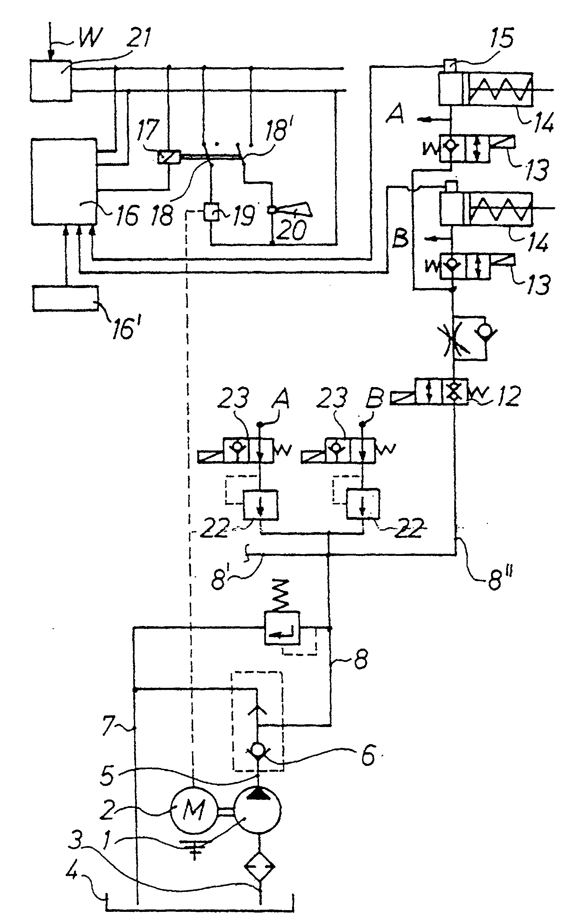

Gemäß der Zeichnung ist eine Hydraulikmediumpumpe 1 von einem Elektromotor 2 angetrieben und steht über eine Leitung 3 mit einem Hydraulikmediumvorrat 4 in Verbindung. Die Pumpe 1 steht ferner über eine Pumpenleitung 5, die ein Wechselventil 6 enthält, mit einer Mediumrückleitung 7 und einer Leitung 8 in Verbindung, die sich in Zweigleitungen 8', 8" verzweigt. Der in Fig. 1 linke Zweig 8' speist über nicht gezeigte steuerbare Ventile zwei nicht gezeigte Hubzylinder einer ebenfalls nicht gezeigten Ladebordwand.

Analog speist die rechte Zweigleitung 8" über ein steuerbares Schließventil 12 und zwei steuerbare Schließzylinderventile 13 zwei als Schließzylinder wirkende Arbeitszylinder 14 der Ladebordwand.

An die größere Kammer des Arbeitszylinders 14 ist ein Drucksensor 15 einer einstellbaren elektrischen Druckmeß- und Schalteinrichtung angeschlossen, die einen schematisch dargestellten Rechner 16 umfaßt, in welchen die zu überwachenden Druckwerte der Arbeitszylinder 14, z.B. 250 bar, sowie deren zulässiger Überschreitungsbereich, z.B. 250-280 bar, über eine Tastatur 16' eingegeben werden. Bei Überschreiten des Grenzdruckes, z.B. 280 bar, aktiviert der Rechner 16 über einen Schaltausgang ein Relais 17 für einen Schalter 18 zum Stillsetzen des Magnetstartschalters 19 des Pumpenmotors M und einen damit gekoppelten Schalter 18' für das Einschalten eines Signalgebers, z.B. einer optischen oder akustischen Anzeigeeinrichtung, bevorzugt einer Hupe 20.

Im Rahmen der Erfindung könnte die gezeigte Schaltung auch so getroffen werden, daß die Hupe 20 aktiviert wird, bevor der Magnetstartschalter 19 unterbrochen wird. Zweckmäßig ist von der Druckmeß- und Schalteinrichtung ein nicht gezeigtes Zählwerk für die Anzahl der Drucküberschreitungen aktivierbar.

Die gesamte Druckmeß- und Schalteinrichtung ist bevorzugt nur in Betrieb, wenn die Ladebordwand oder ein anderes lastbeaufschlagtes Arbeitselement z.B. eines Kranes in der Offenstellung ist und einen vorbestimmten Neigungswinkel von z.B. ±15° nicht über- oder unterschreitet. Zu diesem Zweck ist die Speisestromquelle 21 von einem nicht gezeigten Winkelgeber (Pfeil W) aktivierbar oder anschaltbar.

Um einen Druckaufbau bei einer Erwärmung des Hydraulikkreises, z.B. wenn die Vorrichtung der Sonne ausgesetzt ist, im Ruhezustand zu vermeiden, welcher sonst bei einem Einschalten der Anspeisung sofort zu einer Überlastanzeige, z.B. Betätigung der Hupe 21, führen würde, ist an die Pumpenzweigleitung 8" bzw. im dargestellten Fall an den jedem Arbeitszylinder 14 gesondert zugeordneten letzten Abschnitt der Pumpenzweigleitung 8" (Abgreifpunkte A, B) ein zum Mediumvorrat 4 zurückführendes Sicherheitsventil 22 über ein Elektromagnetventil 23 angeschlossen. Das Sicherheitsventil 22 ist auf einen geringeren Öffnungsdruck als der voreingestellte Grenzdruck der Druckmeßund Schalteinrichtung 15-18 eingestellt, beispielsweise 20% darunter. Das Elektromagnetventil 23 ist in der Ruhestellung geöffnet und wird bei Einschalten der Anspeisung 21 gesperrt.

Die Erfindung ist selbstverständlich nicht auf das dargestellte Ausführungsbeispiel beschränkt. Beispielsweise kann der Drucksensor 15 auch direkt an die zugeordneten Abschnitte der Pumpenzweigleitung 8" (Punkte A, B) angeschlossen werden, oder es kann auch nur ein einziger, an die Pumpenzweigleitung 8" angeschlossener Drucksensor Verwendung finden, wenn die zur Entkopplung der Arbeitszylinder 14 dienenden Schließzylinderventile 13 entfallen.

## Patentansprüche

1. Steuervorrichtung für hydraulische Arbeitszylinder, insbesondere Arbeitszylinder einer Lastfahrzeug-Ladebordwand, mit einer von einem Motor (M) angetriebenen Hydraulikmediumpumpe (1), die mit einem Mediumvorrat und über Pumpenzweigleitungen mit jeweils einer Kammer des Arbeitszylinders (14) über zugeordnete Steuerventile (12, 13) in Verbindung setzbar ist, **dadurch gekennzeichnet, daß** an die Kammer oder jeweilige Pumpenzweigleitung (8", A, B) des Arbeitszylinders (14) eine einstellbare elektrische Druckmeß- und Schalteinrichtung (15-18) angeschlossen ist, die mit einem Rechner (16) für die Eingabe von Grenz-Druckwerten versehen ist und über welche bei Überschreiten eines vorbestimmten Grenzdruckes der Pumpenmotorantrieb (2, 19) stillsetzbar und ein Signalgeber (20) aktivierbar sind, wobei an die Kammer oder jeweilige Pumpenzweigleitung (8", A, B) ferner ein auf einen geringeren Öffnungsdruck als der genannte Grenzdruck eingestelltes Sicherheitsventil (22) über ein in der Ruhestellung der Vorrichtung öffnendes Elektromagnetventil (23) angeschaltet ist.

2. Steuervorrichtung nach Anspruch 1, **dadurch gekennzeichnet, daß** die Druckmeß- und Schalteinrichtung (15-18) nur in der Offenstellung einer Ladebordwand oder eines anderen belasteten Arbeitselementes, z.B. eines Kranes, innerhalb eines Neigungswinkels derselben von ±15° mit der elektrischen Anspeisung (21) in Verbindung gesetzt wird.

3. Steuervorrichtung nach Anspruch 1 oder 2, **dadurch gekennzeichnet, daß** von der elektrischen Druckmeß- und Schalteinrichtung (15-18) ein Zählwerk für die Anzahl der Drucküberschreitungen aktivierbar ist.

## Claims

1. Control device for hydraulic power cylinders, in particular power cylinders of a tailgate of a truck, with a hydraulic medium pump (1) driven by a motor (M), which pump may be connected to a medium supply and to a chamber of the power cylinder (14) by associated control valves (12, 13), **characterized by** the fact that a pressure gauge and switching device (15-18) provided with a computer (16) for inputting of threshold values is connected to the chamber of given branch conduit (8", A, B) by means of which the pump motor drive (2, 19) may be switched off and a signal generator (20) may be actuated if a predetermined threshold value is exceeded, whereby a safety valve (22) set at an opening pressure lower than the mentioned threshold value is connected to the chamber or given pump branch circuit (8", A, B) by way of a solenoid valve (23) which opens in the idle state of the device.

2. Control device according to claim 1, **characterized by** the fact that the pressure gauge and switching device (15-18) is connected to a source (21) of electricity only in the open state of a tailgate or another load-bearing component, e.g. a crane, within an angle of inclination thereof of ±15°.

3. Control device according to claim 1 or 2, **characterized by** the fact that a counter for the number of times pressure has been exceeded may be actuated by the electric pressure gauge and switching device (15-18).

## Revendications

1. Dispositif de commande pour vérins d'actionnement hydrauliques, en particulier pour des vérins d'actionnement d'une ridelle de chargement d'un camion avec une pompe d'agent hydraulique (1) entraînée par un moteur (M), pompe qui peut être mise en communication avec une réserve d'agent et, par l'intermédiaire de dérivations de pompe avec respectivement une chambre du vérin d'actionnement (14) par le biais de soupapes de commande affectées (12,13), **caractérisé en ce qu'**un système électrique réglable de mesure de pression et de commutation (15-18) est raccordé à la chambre ou à la dérivation de pompe respective (18",A,B) du vérin d'actionnement (14), système électrique de mesure de pression et de commutation (15-18) qui est équipé d'un calculateur (16) pour l'entrée des valeurs de pression limites et par l'intermédiaire desquelles, en cas de dépassement d'une pression limite prédéterminée, l'entraînement du moteur de pompe peut être arrêté et un émetteur de signaux (20) peut être activé, tandis que par ailleurs, à la chambre ou à la dérivation de pompe respective (8",A,B) est connectée une soupape de sûreté (22) réglée à une pression d'ouverture plus faible que la pression limite mentionnée par l'intermédiaire d'une soupape électromagnétique (23) s'ouvrant dans la position de repos du dispositif.

2. Dispositif de commande selon la revendication 1, **caractérisé en ce que** le système de mesure de pression et de commutation (15-18) ne peut être mis en communication avec l'alimentation électrique que dans la position ouverte d'une ridelle de chargement ou d'un autre élément de travail sous charge, par exemple d'une grue, à l'intérieur d'un angle d'inclinaison de ceux-ci de + ou - 15°.

3. Dispositif de commande selon la revendication 1 ou 2, **caractérisé en ce qu'**un mécanisme compteur peut être activé pour le nombre de dépassements de pression par le système électrique de mesure de pression et de commutation (15-18).
